# EUROPÄISCHE PATENTSCHRIFT

(11) **EP 3 288 797 B1**
(45) Veröffentlichungstag und Bekanntmachung des Hinweises auf die Patenterteilung: **27.02.2019**
(21) Anmeldenummer: 16709778.1
(22) Anmeldetag: 11.03.2016
(51) Int. Cl.: B60R 1/00

(54) **VERFAHREN UND SYSTEM ZUM STEUERN EINES AUSSENSPIEGELERSATZSYSTEMS EINES FAHRZEUGES IM BEREICH ZWEI SICH KREUZENDER WEGE SOWIE AUSSENSPIEGELERSATZ-SYSTEM MIT EINEM DERARTIGEN SYSTEM**
METHOD AND SYSTEM FOR CONTROLLING AN EXTERIOR MIRROR SUPPLEMENTATION SYSTEM OF A MOTOR VEHICLE IN THE REGION OF TWO CROSSING PATHS AND EXTERIOR MIRROR SUPPLEMENTATION SYSTEM COMPRISING SUCH A SYSTEM
PROCÉDÉ ET SYSTÈME POUR COMMANDER UN SYSTÈME DE REMPLACEMENT DE RÉTROVISEUR EXTÉRIEUR D'UN VÉHICULE DANS UNE ZONE DANS LAQUELLE DEUX TRAJECTOIRES SE CROISENT ET SYSTÈME DE REMPLACEMENT DE RÉTROVISEUR EXTÉRIEUR ÉQUIPÉ D'UN TEL SYSTÈME

(30) Priorität: 30.04.2015 DE 102015207974
(43) Veröffentlichungstag der Anmeldung: 07.03.2018
(73) Patentinhaber: Robert Bosch GmbH, 70442 Stuttgart (DE)
(72) Erfinder: PRENZEL, Ralf, 31141 Hildesheim (DE)
(86) Internationale Anmeldenummer: PCT/EP2016/055347
(87) Internationale Veröffentlichungsnummer: WO 2016/173763

(56) Entgegenhaltungen:
- EP-A1- 1 731 367
- US-A1- 2006 155 444
- US-A1- 2010 039 720

## Beschreibung

Die Erfindung betrifft ein Verfahren zum Steuern eines Außenspiegelersatzsystems eines Fahrzeuges im Bereich zwei sich kreuzender Wege, bei welchem sich das Fahrzeug auf dem ersten Weg bewegt. Weiter betrifft die Erfindung ein System zum Steuern eines Außenspiegelersatzsystems eines Fahrzeuges im Bereich zwei sich kreuzender Wege, wobei sich das Fahrzeug auf dem ersten Weg bewegt. Ferner betrifft die Erfindung ein Außenspiegelersatzsystem für ein Fahrzeug.

### Stand der Technik

Es ist bekannt, bei Fahrzeugen, insbesondere bei Nutzfahrzeugen, wie Lastkraftfahrzeugen, die Außenspiegel zumindest teilweise durch eine oder mehrere Kameras und eine oder mehrere in dem Innenraum des Fahrzeuges angeordnete Anzeigeeinrichtungen, wie beispielsweise Bildschirme oder Displays, die das Bild, insbesondere in Form eines Videobildes, der Kameras darstellen, zu ersetzen, um die Aerodynamik des Fahrzeuges, insbesondere in Bezug auf den Luftwiderstand des Fahrzeuges, zu verbessern. Ein derartiges Außenspiegelersatzsystem ist beispielsweise in der DE 199 513 76 A1, DE 10 2011 010 624 A1 und DE 10 2014 001 835 A1 beschrieben.

In einem Fahrzeug, das ein Kamera gestütztes Außenspiegelersatzsystem aufweist, wird auf den Anzeigeeinrichtungen ein bestimmter Bereich der von den Kameras erfassten Verkehrssituation hinter und neben dem Fahrzeug dargestellt. Dieser Bereich ist so eingestellt, dass der Fahrer des Fahrzeuges einen guten Blick nach hinten, ähnlich dem gewohnten Blick durch normale Rückspiegel bzw. Außenspiegel hat. Nähert sich das Fahrzeug einer Kreuzung, beispielsweise einer Auffahrt auf einen vorrangigen Weg, insbesondere einer Straße, muss der Fahrer eine gute Sicht auf den Weg haben, auf den aufgefahren werden soll. Aus der DE 10 2011 010 624 A1 ist ein Verfahren bekannt, bei welchem der Spiegelbereich des Außenspiegelersatzsystems seitlich am Fahrzeug erweitert wird, um z.B. den Totwinkelbereich zu minimieren.

Die US 2006/155444 A1 offenbart ein Außen-Rückspiegelsystem für ein Fahrzeug mit einem außen am Fahrzeug angeordneten Rückspiegel, bei welchem eine Blickrichtung des Rückspiegels durch Verschwenken seiner Spiegelfläche in Abhängigkeit einer Fahrsituation eingestellt wird, um sogenannte "blinde Flecken" im durch den Außen-Rückspiegel durch den Benutzer sichtbaren, rückwärtigen Bereich in dieser Fahrsituation zu eliminieren. Relevante, zu berücksichtigende Fahrsituationen sind dabei Wendemanöver, Fahrspurwechsel, Einfädelvorgänge in eine Fahrzeugkolonne etc. Zur Erkennung eines aktuellen oder bevorstehenden, relevanten Fahrmanövers werden im Fahrzeug vorliegende Informationen, wie Lenkradstellung, Fahrzeugdrehung, Fahrzeuggeschwindigkeit, Fahrrichtungsanzeiger, GPS-Signal und Karteninformationen genutzt.

Einige Kreuzungen von Wegen, wie beispielsweise zweier Straßen, einer Straße und einem Radweg oder Fußgängerweg, oder einer Straße und einem Schienenweg für Schienenfahrzeuge, sind jedoch derart gestaltet, dass die beiden aufeinanderzulaufenden, sich kreuzenden Wege sehr unterschiedliche Steigungen aufweisen. In diesem Fall kann es passieren, dass der Bereich der Kamera, der horizontal, also senkrecht zur Längsachse des Fahrzeugs gerichtet ist, nicht optimal zur Erkennung der Fahrzeuge, Radfahrer oder Fußgänger auf dem anderen, eventuell vorfahrtsberechtigten Weg ausgerichtet bzw. eingestellt ist. Ein Fahrer eines Fahrzeugs mit normalen Außenspiegeln würde in diesem Fall seine Kopfposition, z. B. durch Vorbeugen, soweit ändern, dass er den kreuzenden Weg mit Hilfe des Außenspiegels gut erkennen kann. Bei Kamera basierten Außenspiegelersatzsystemen hilft diese Veränderung der Kopfposition nichts, da die Anzeigeeinrichtungen des Außenspiegelersatzsystems weiterhin den gleichen Ausschnitt der Straße zeigen.

### Offenbarung der Erfindung

Vor diesem Hintergrund wird mit der vorliegenden Erfindung ein Verfahren zum Steuern eines Außenspiegelersatzsystems eines Fahrzeuges im Bereich zwei sich kreuzender Weg gemäß dem Anspruch 1 vorgestellt. Weiter werden mit der vorliegenden Erfindung ein System zum Steuern eines Außenspiegelersatzsystems eines Fahrzeuges im Bereich zwei sich kreuzender Wege gemäß dem Anspruch 12 sowie ein Außenspiegelersatzsystem gemäß dem Anspruch 14 mit einem derartigen System vorgestellt. Zweckmäßige Ausgestaltungen und vorteilhafte Weiterbildungen der Erfindung sind in den Unteransprüchen angegeben.

Das Verfahren gemäß der Erfindung zeichnet sich dadurch aus, dass eine Steigung des zweiten Weges ermittelt wird und in Abhängigkeit der ermittelten Steigung des zweiten Weges ein Blickwinkelbereich bestimmt wird, wobei mindestens eine Kamera des Außenspiegelersatzsystems in Abhängigkeit des in Abhängigkeit der ermittelten Steigung des zweiten Weges bestimmten Blickwinkelbereichs eingestellt wird.

Das erfindungsgemäße Verfahren bezieht somit die Steigung des Weges, auf welchem sich das Fahrzeug gerade nicht befindet und auf welchen das Fahrzeug gegebenenfalls auffahren will, in die Anpassung der Blickwinkelbereiche der einen oder mehreren Kameras des Außenspiegelersatzsystems ein, indem die Steigung dieses zweiten Weges bestimmt wird. Während des Passierens der Kreuzung kann dann der Blickwinkelbereich einer oder mehrerer Kameras des Außenspiegelersatzsystems derart eingestellt bzw. verändert werden, dass dieser zweite Weg optimal von der Kamera oder den Kameras erfasst werden kann. Bei diesem Verfahren wird somit eine Kamera des Außenspiegelersatzsystems nicht nur derart eingestellt, dass der erste Weg, auf dem sich das Fahrzeug gerade befindet, eingesehen werden kann, sondern es wird zusätzlich dieselbe Kamera oder eine andere Kamera des Außenspiegelersatzsystems in Abhängigkeit des durch die ermittelte Steigung des zweiten Weges bestimmten Blickwinkelbereiches eingestellt, um den zweiten Weg, auf welchen das Fahrzeug gegebenenfalls auffahren will bzw. auf welchem sich Fußgänger, Radfahrer und/oder Schienenfahrzeuge bewegen, ebenfalls einsehen zu können. Das Risiko, den Verkehr bzw. die Verkehrsteilnehmer auf dem zweiten Weg mit dem Außenspiegelersatzsystem nicht vollständig erfassen zu können und damit andere Verkehrsteilnehmer oder Hindernisse auf diesem zweiten Weg zu übersehen, kann dadurch wesentlich reduziert werden.

Um die Kamera derart einzustellen, dass der erste Weg, auf welchem sich das Fahrzeug zuam aktuellen Zeitpunkt befindet bzw. fährt, gut eingesehen werden kann, kann es bevorzugt vorgesehen sein, dass ein Neigungswinkel des Fahrzeuges bestimmt wird. Die Neigung des Fahrzeuges entspricht im Wesentlichen einem Blickwinkel entlang der Längsachse des Fahrzeuges. Hierdurch kann der relative Einstellungswinkel der auf den zweiten Weg gerichteten Kamera zur aktuellen Position einer auf die Längsachse gerichteten Kamera bestimmt werden. Die Bestimmung der Neigung des Fahrzeuges kann beispielsweise anhand von 3D-Giro Daten erfolgen.

Alternativ oder zusätzlich ist es möglich, dass eine Steigung des ersten Weges ermittelt wird. In Abhängigkeit der ermittelten Steigung des ersten Weges kann dann ein weiterer Blickwinkelbereich zusätzlich zu dem durch die Steigung des zweiten Weges ermittelten Blickwinkelbereich bestimmt werden.

Bevorzugt ist es vorgesehen, dass das Außenspiegelersatzsystem je Fahrzeugseite des Fahrzeuges eine erste Kamera und eine zweite Kamera aufweist, wobei die erste Kamera in Abhängigkeit des mittels der Steigung des ersten Weges ermittelten Blickwinkelbereiches eingestellt wird und die zweite Kamera in Abhängigkeit des mittels der Steigung des zweiten Weges ermittelten Blickwinkelbereiches eingestellt wird. Die zwei Kameras einer Fahrzeugseite sind somit unabhängig voneinander einstellbar. Mit der ersten Kamera kann dann der erste Weg dargestellt werden, auf der sich das Fahrzeug zum momentanen Zeitpunkt bewegt, und mit der zweiten Kamera kann der zweite Weg dargestellt werden, welcher den ersten Weg kreuzt und auf den sich das Fahrzeug gegebenenfalls zu einem späteren Zeitpunkt bewegen wird. Die Bilder der einzelnen Kameras können dann auf den sich im Innenraum des Fahrzeuges befindlichen Anzeigeeinrichtungen dargestellt werden.

Es ist aber auch möglich, dass je Fahrzeugseite des Fahrzeuges nur eine Kamera angeordnet ist. Die Kameraeinstellung dieser einen Kamera kann dann beispielsweise derart vorgenommen werden, dass die Kamera beide Blickwinkelbereiche zumindest zum Teil abdeckt. Es kann aber auch vorgesehen sein, dass die Kamera abwechselnd auf den mittels der Steigung des ersten Weges ermittelten Blickwinkelbereich und auf den mittels der Steigung des zweiten Weges ermittelten Blickwinkelbereich eingestellt wird, so dass auf den Anzeigeeinrichtungen im Innenraum des Fahrzeuges die Bilder aus beiden Blickwinkelbereichen dargestellt werden können.

Die Steigung des ersten Weges und/oder die Steigung des zweiten Weges werden vorzugsweise mit Daten der aktuellen Position des Fahrzeuges, d. h. der Position des Fahrzeuges zum momentanen Zeitpunkt, und mit Daten einer Umgebungskarte ermittelt. Die Daten der aktuellen Position des Fahrzeuges können beispielsweise mittels einer Fahrzeugsensoreinheit ermittelt werden. Weiter ist es aber auch möglich, dass die Daten der aktuellen Position des Fahrzeuges und/oder die Daten einer Umgebungskarte mittels einer Navigationseinheit ermittelt werden. Die Navigationseinheit kann derart ausgebildet sein, dass diese mit Hilfe von GPS Sensordaten die aktuelle Position des Fahrzeuges ermitteln kann und mit dieser Information aus Kartendaten, insbesondere Umgebungskartendaten, der Navigationseinheit die wahrscheinlichste Strecke auf dem Weg bestimmen kann. Die Navigationseinheit kann Daten von einem GPS Sensorsystem sowie Fahrzeugdaten, z. B. über einen im Fahrzeug üblicherweise vorhandenen CAN Bus, erhalten. Die Navigationseinheit kann aus vorhandenen Kartendaten die Steigung des ersten Weges, auf welchem sich das Fahrzeug zum aktuellen Zeitpunkt bewegt, sowie die Steigung angrenzender, insbesondere kreuzender Wege, bestimmen. Die Steigungsdaten der Wege werden auch als elektronischer Horizont bezeichnet, deren Werte üblicherweise in Entfernungsschritten von 25 bis 50 m berechnet werden und einen Bereich von etwa 5 bis 6 km abdecken können.

Zur Ermittlung der Steigung des ersten Weges und/oder der Steigung des zweiten Weges ist es vorteilhaft, wenn mehrere Steigungswerte entlang eines definierten Streckenabschnitts des ersten Weges und/oder des zweiten Weges gemittelt werden. Bei der Bestimmung der Steigungen können über einen bestimmten Streckenabschnitt, z. B. die letzten 500 m vor der Kreuzung der beiden Wege, die Steigungswerte gemittelt werden, um einen verbesserten Steigungswert zur Einstellung der Kameras zu erhalten. Die Länge des Streckenabschnittes, der zur Ermittlung der Steigungen betrachtet wird, kann von verschiedenen Parametern abhängig sein. Ein Parameter kann beispielsweise die Wegklasse sowohl des ersten Weges als auch des zweiten Weges sein, wobei dabei auch berücksichtigt werden kann, wenn diese unterschiedliche Wegklassen aufweisen. Mit Wegklasse ist gemeint beispielsweise ein Weg, insbesondere eine Straße, innerorts oder ein Weg, insbesondere eine Straße, außerorts, wie beispielsweise eine Schnellstraße, wobei der Weg innerorts eine andere Wegklasse aufweist als der Weg außerorts. Ist der Weg eine Schnellstraße, auf welcher die Fahrzeuge mit einer erhöhten Geschwindigkeit fahren können, ist es sinnvoll, einen größeren Streckenabschnitt zu betrachten, da die Fahrzeuge eine größere Strecke pro Sekunde zurücklegen. Je schneller die Fahrzeuge auf dem Weg fahren können, desto länger sollte der zu berücksichtigende Streckenabschnitt bei der Ermittlung der Steigung sein. Ein weiterer Parameter kann eine auf dem ersten Weg und/oder dem zweiten Weg bestehende Geschwindigkeitsbegrenzung sein. Weiter kann ein Parameter eine Geschwindigkeitsdifferenz zwischen Fahrzeugen sein. Ferner kann ein Parameter eine aus Messungen über viele Fahrzeuge gemittelte Geschwindigkeit sein.

Wird kein Streckenabschnitt zur Ermittlung der Steigung des ersten Weges und/oder der Steigung des zweiten Weges verwendet, kann die Steigung des ersten Weges und/oder die Steigung des zweiten Weges auch nur an einem Punkt bzw. Ort des jeweiligen Weges ermittelt werden.

Ferner ist es bei der Bestimmung des mittels der Steigung des ersten Weges ermittelten Blickwinkelbereiches und/oder des mittels der Steigung des zweiten Weges ermittelten Blickwinkelbereiches möglich, dass ein Kurvenverlauf des ersten Weges und/oder ein Kurvenverlauf des zweiten Weges mit erfasst werden. Der Kurvenverlauf des ersten Weges und/oder der Kurvenverlauf des zweiten Weges kann beispielsweise mit bekannten Verfahren aus den Navigationsdaten der Navigationseinheit bestimmt werden.

Weiter ist es möglich, dass bei der Bestimmung des mittels der Steigung des ersten Weges ermittelten Blickwinkelbereiches und/oder des mittels der Steigung des zweiten Weges ermittelten Blickwinkelbereiches eine Kopfbewegung eines Fahrers des Fahrzeuges mit erfasst wird. Zur Detektion der Position des Kopfes des Fahrers können Fahrzeugsensoren, die ein Verfahren, wie z. B. zur Müdigkeitserkennung von Fahrern, implimentiert haben, verwendet werden. Das Erfassen der Kopfbewegung des Fahrers kann durch Bestimmen der Kopfposition und/oder des Blickwinkels des Fahrers erfolgen, wobei durch das Erfassen der Kopfbewegung des Fahrers der Blickwinkel, den der Fahrer sehen möchte, ermittelt oder geschätzt werden kann. Hierdurch kann sichergestellt werden, dass auf den Anzeigeeinrichtungen das für den Fahrer besonders wichtige Bild von dem ersten und/oder dem zweiten Weg angezeigt wird.

Die Erfindung zeichnet sich ferner durch ein System zum Steuern eines Außenspiegelersatzsystems im Bereich zwei sich kreuzender Wege aus, wobei sich das Fahrzeug auf dem ersten Weg bewegt, welches mindestens eine Datenerfassungseinheit, in welcher eine Steigung des zweiten Weges ermittelt wird, mindestens eine Auswerteeinheit, in welcher in Abhängigkeit der ermittelten Steigung des zweiten Weges ein Blickwinkelbereich bestimmt wird, und mindestens eine Steuereinheit, mittels welcher mindestens eine Kamera des Außenspiegelersatzsystems in Abhängigkeit des in Abhängigkeit der ermittelten Steigung des zweiten Weges bestimmten Blickwinkelbereichs eingestellt wird, aufweist.

Die mindestens eine Datenerfassungseinheit und/oder die mindestens eine Auswerteeinheit und/oder die mindestens eine Steuereinheit können in einem Steuergerät integriert sein. Sie können aber auch als einzelne Steuergeräte ausgebildet sein.

Die Datenerfassungseinheit kann eine Navigationseinheit und/oder eine Fahrzeugsensoreinheit aufweisen, mittels welchen die Steigung des ersten Weges und/oder die Steigung des zweiten Weges ermittelt werden kann.

Ferner zeichnet sich die Erfindung durch ein Außenspiegelersatzsystem für ein Fahrzeug aus, welches mindestens eine in einem Innenraum des Fahrzeuges angeordnete Anzeigeeinrichtung, welche mit der Kamera verbunden ist und ein von der Kamera aufgenommenes Bild anzeigt, und ein wie vorstehend beschriebenes, aus- und weitergebildetes System, mittels welchem die mindestens eine Kamera zur optimalen Erfassung der Verkehrssituation auf dem ersten Weg und dem zweiten Weg einstellbar ist, aufweist.

Weitere, die Erfindung verbessernde Maßnahmen werden nachstehend gemeinsam mit der Beschreibung bevorzugter Ausführungsbeispiele der Erfindung anhand der Figuren näher dargestellt.

Es zeigen:
- Fig. 1: eine schematische Darstellung eines ersten Weges und eines den ersten Weg kreuzenden zweiten Weges,
- Fig. 2: eine weitere schematische Darstellung eines ersten Weges und eines den ersten Weg kreuzenden zweiten Weges mit Darstellung der verschiedenen Steigungen,
- Fig. 3: eine weitere schematische Darstellung eines ersten Weges und eines den ersten Weg kreuzenden zweiten Weges mit Darstellung der verschiedenen Blickwinkelbereiche, und
- Fig. 4: eine schematische Darstellung eines Außenspiegelersatzsystems.

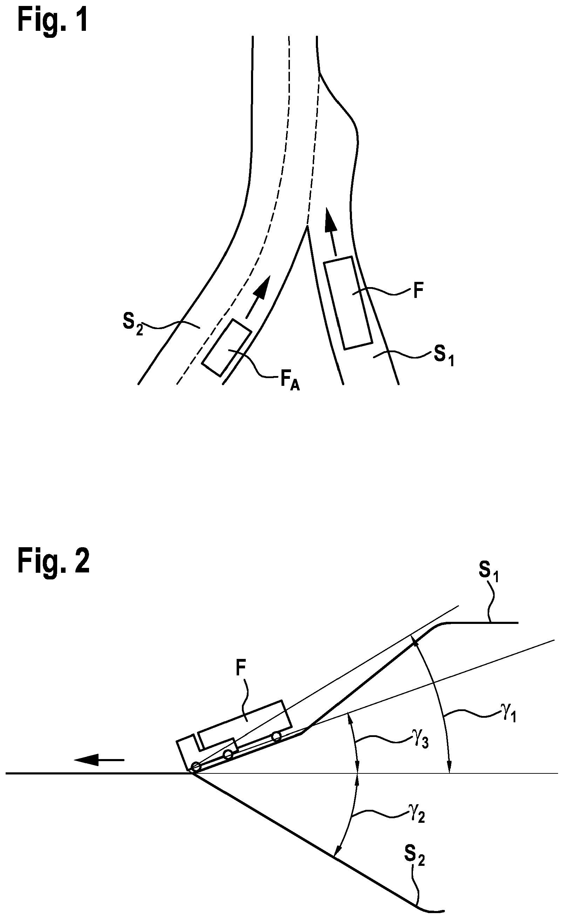

In Fig. 1 ist ein erster Weg S₁ und ein den ersten Weg S₁ kreuzender, zweiter Weg S₂ gezeigt. Ein Fahrzeug F, welches sich zu dem hier gezeigten momentan Zeitpunkt auf dem ersten Weg S₁ befindet, möchte zu einem späteren Zeitpunkt auf den zweiten Weg S₂ auffahren. Bei dem hier gezeigten Ausführungsbeispiel fährt auf dem zweiten Weg S₂ ein weiteres Fahrzeug F_{A}, welches beim Auffahren des Fahrzeugs F von dem Fahrzeug F beachtet werden muss, um einen Unfall zu vermeiden.

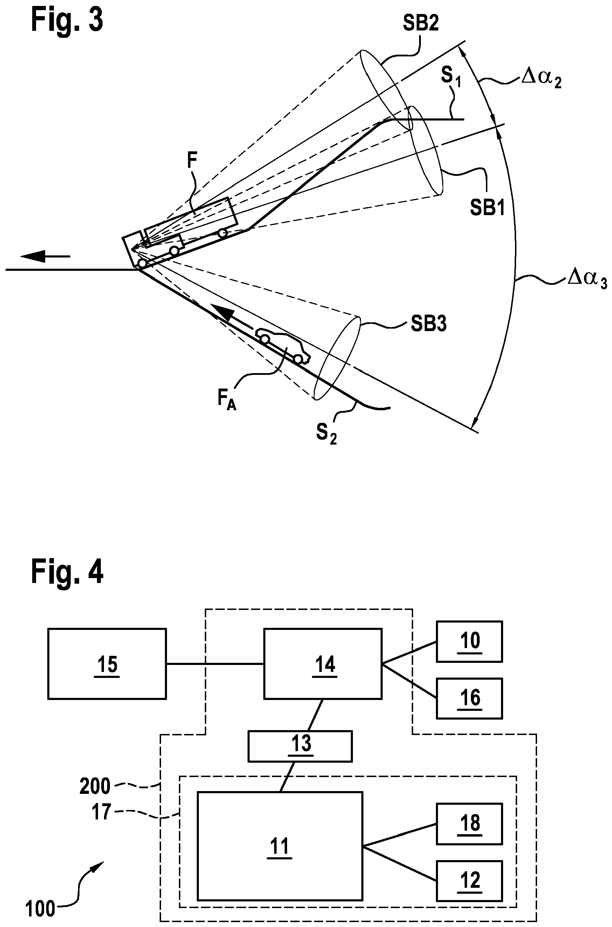

In Fig. 2 und und Fig. 3 sind die beiden Wege S₁ und S₂ noch einmal in einer anderen Perspektive dargestellt.

Wie in Fig. 2 zu erkennen ist, weisen die beiden Wege S₁ und S₂ unterschiedliche Steigungen auf. Der erste Weg S₁, auf dem das Fahrzeug F zum aktuellen Zeitpunkt fährt, ist eine abfallende Auffahrt, also von oben her kommend, während der zweite Weg S₂, auf die das Fahrzeug F zum späteren Zeitpunkt auffahren will, ansteigend ist, also von unten kommend. Fährt das Fahrzeug F nun auf die Kreuzung der beiden Wege S₁ und S₂ zu, werden die Kameras 10 des Außenspiegelersatzsystems 100 in ihren Blickwinkelbereichen in Abhängigkeit der Steigung des ersten Weges S₁ und der Steigung des zweiten Weges S₂ eingestellt und somit derart gesteuert, dass der Fahrer des Fahrzeuges F die Verkehrssituation sowohl auf dem ersten Weg S₁ als auch auf dem zweiten Weg S₂ optimal erfassen kann.

Die Steuerung der einen oder mehreren Kameras 10 kann dabei entsprechend der nachfolgenden Beschreibung erfolgen. Die einzelnen Einheiten eines Außenspiegelersatzsystems 100 sind in Fig. 4 schematisch dargestellt.

Zunächst erkennt eine Navigationseinheit 11, dass das Fahrzeug F auf eine Kreuzung, in welcher der erste Weg S₁ mit dem zweiten Weg S₂ kreuzt, zufährt. Die Navigationseinheit 11 bestimmt dann aus der aktuellen Position des Fahrzeuges F und den Daten einer Umgebungskarte die Steigung des ersten Weges S₁ und die Steigung des zweiten Weges S₂ jeweils etwa 2 km vor und nach der Kreuzung.

Die Steigungen können auch von Fahrzeugsensoreinheiten 12 des Fahrzeuges F ermittelt werden und der Navigationseinheit 11 beispielsweise über einen CAN Bus zur Verfügung gestellt werden.

Die ermittelten Daten bezüglich der Steigungen werden dann an eine Auswerteeinheit 13 weitergeleitet. Die Auswerteeinheit 13 bestimmt in Abhängigkeit der ermittelten Steigung des ersten Weges S₁ einen ersten Blickwinkelbereich und in Abhängigkeit der ermittelten Steigung des zweiten Weges S₂ einen zweiten Blickwinkelbereich.

Die ermittelten Blickwinkelbereiche werden wiederum an eine Steuereinheit 14 weitergeleitet, welche mit der einen oder den mehreren Kameras 10 des Außenspiegelersatzsystems 100 verbunden ist, so dass die Kameras 10 entsprechend der ermittelten Blickwinkelbereiche eingestellt werden können.

Vorzugsweise wird eine erste Kamera 10 auf den ersten Blickwinkelbereich eingestellt, welcher in Abhängigkeit der Steigung des ersten Weges S₁ ermittelt wurde. Eine zweite Kamera 10 wird dann auf den zweiten Blickwinkelbereich eingestellt, welcher in Abhängigkeit der Steigung des zweiten Weges S₂ ermittelt wurde, so dass der Blickwinkel der Kamera 10 optimal auf den vor der Kreuzung liegenden Teil des zweiten Weges S₂ eingestellt werden kann, so dass eventuell auf diesem zweiten Weg S₂ fahrende Fahrzeuge F_{A} rechtzeitig erkannt werden können. Hierbei wird die Steigung des zweiten Weges S₂ vor der Kreuzung bei der Berechnung des Blickwinkelbereiches mit berücksichtigt.

Die Einstellung der einen oder mehreren Kameras 10 kann kontinuierlich mit neuen Steigungsdaten, insbesondere der Steigung des ersten Weges S₁ an der aktuellen Position des Fahrzeuges F, aktualisiert werden, und die Blickwinkelbereiche der einen oder mehreren Kameras 10 können kontinuierlich entsprechend angepasst werden.

Die Blickwinkelbereiche können beispielsweise wie in Fig. 2 und 3 gezeigt ist bestimmt werden. Dabei sind γ₁ die Steigung des ersten Weges S₁ gemittelt über einen zurückliegenden Streckenabschnitt, γ₂ die Steigung des zweiten Weges S₂ gemittelt über einen Streckenabschnitt vor der Kreuzung, γ₃ ein aktueller Steigungswert an der Position des Fahrzeuges F, SB1 ein normaler Sichtbereich des Außenspiegelersatzsystems 100 senkrecht zur Fahrzeugachse, SB2 ein um Δα₂ verschobener Sichtbereich unter Berücksichtigung der Steigung des ersten Weges S₁ und SB3 ein um Δα₃ verschobener Sichtbereich, der zusätzlich die Steigung des zweiten Weges S₂ berücksichtigt, auf den bei dem hier gezeigten Ausführungsbeispiel an der Kreuzung aufgefahren werden soll.

Aus der hier negativen Steigung γ₃ des Weges S₁ an der aktuellen Position des Fahrzeugs F und der Steigung γ₁ des bislang befahrenen Weges S₁ kann die Änderung Δα₂ des Blickwinkelbereiches einer Kamera 10 bestimmt werden, die den Weg S₁ im Blick behält. Der in Fig. 3 eingezeichnete Sichtbereich SB2 wird dann durch diese Kamera 10 abgedeckt.

Der Blickwinkelbereich der zweiten Kamera 10 soll so eingestellt werden, dass der Sichtbereich SB3 den Weg S₂ gut einsehbar abdeckt. Dazu wird die Steigung γ₂ mit Hilfe der Daten der Navigationseinheit 11 auf einem bestimmten Teilstück vor der Kreuzung bestimmt. Die Änderung Δα₃ des Blickwinkelbereiches der zweiten Kamera 10 kann dann aus der Steigung γ₃ der aktuellen Position des Fahrzeuges F und der Steigung γ₂ des zweiten Weges S₂ bestimmt werden und die Kamera 10 kann entsprechend eingestellt werden.

Das Bild des zweiten Weges S₂, das mit der zweiten Kamera 10 aufgenommen wurde, die entsprechend der zuvor beschriebenen Vorgehensweise eingestellt wurde, kann nun auf einer oder mehreren Anzeigeeinrichtungen 15 des Außenspiegelersatzsystems 100 dargestellt werden, so dass der Fahrer einen optimalen Blick auf die Verkehrslage des zweiten Weges S₂ hat. Der Fahrer kann so optimal den Verkehrsfluss einsehen und damit das Risiko eines Unfalls weiter reduzieren.

Fig. 4 zeigt einen Aufbau eines Außenspiegelersatzsystems 100. Das Außenspiegelersatzsystem 100 weist mindestens eine in einem Innenraum des Fahrzeuges F angeordnete Anzeigeeinrichtung 15, welche über eine oder mehrere Steuereinheiten 14 mit einer oder mehreren Kameras 10 verbunden ist und ein von der oder den mehreren Kameras 10 aufgenommenes Bild anzeigt, auf. Mit der Steuereinheit 14 können ein oder mehrere Fahrzeugsensoren 16 verbunden sein, welche beispielsweise eine Kopfbewegung des Fahrers des Fahrzeuges F bestimmen können. Das Außenspiegelersatzsystem 100 weist ferner ein System 200 zum Steuern des Außenspiegelersatzsystems 100 im Bereich mindestens zwei sich kreuzender Wege S₁, S₂ auf, welches mindestens eine Datenerfassungseinheit 17, in welcher eine Steigung eines ersten Weges S₁, auf welcher sich das Fahrzeug F zu einem aktuellen Zeitpunkt bewegt, ermittelt wird, und eine Steigung eines zweiten, den ersten Weg S₁ kreuzenden Weges S₂, auf welchem sich das Fahrzeug F zu einem späteren Zeitpunkt bewegen kann oder welchen das Fahrzeug F nur kreuzt und auf dem ersten Weg S₁ weiterfährt, ermittelt wird, mindestens eine Auswerteeinheit 13, in welcher in Abhängigkeit der ermittelten Steigung des ersten Weges S₁ ein erster Blickwinkelbereich bestimmt wird und in Abhängigkeit der ermittelten Steigung des zweiten Weges S₂ ein zweiter Blickwinkelbereich bestimmt wird, und mindestens eine Steuereinheit 14, mittels welcher mindestens eine Kamera 10 des Außenspiegelersatzsystems 100 in Abhängigkeit des zweiten Blickwinkelbereichs eingestellt wird, aufweist. Die Datenerfassungseinheit 17 kann eine Navigationseinheit 11, ein oder mehrere Fahrzeugsensoreinheiten 12, die mit der Navigationseinheit 11 verbunden sind, sowie GPS-Sensoren 18, die ebenfalls mit der Navigationseinheit 11 verbunden sind, aufweisen. Die Datenerfassungseinheit 17 ist über die Navigationseinheit 11 mit der Auswerteeinheit 13 verbunden.

Die Erfindung beschränkt sich in ihrer Ausführung nicht auf die vorstehend angegebenen bevorzugten Ausführungsbeispiele. Vielmehr ist eine Anzahl von Varianten denkbar, welche von den dargestellten Lösungen auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

## Patentansprüche

1. Verfahren zum Steuern eines Außenspiegelersatzsystems (100) eines Fahrzeuges (F) im Bereich zwei sich kreuzender Wege (S₁, S₂), bei welchem sich das Fahrzeug (F) auf dem ersten Weg (S₁) bewegt, wobei eine Steigung des zweiten Weges (S₂) ermittelt wird, und in Abhängigkeit der ermittelten Steigung des zweiten Weges (S₂) ein Blickwinkelbereich bestimmt wird, wobei mindestens eine Kamera (10) des Außenspiegelersatzsystems (100) in Abhängigkeit des in Abhängigkeit der ermittelten Steigung des zweiten Weges (S₂) bestimmten Blickwinkelbereichs eingestellt wird.

2. Verfahren nach Anspruch 1, **dadurch gekennzeichnet, dass** ein Neigungswinkel des Fahrzeuges (F) bestimmt wird.

3. Verfahren nach Anspruch 1 oder 2, **dadurch gekennzeichnet, dass** eine Steigung des ersten Weges (S₁) ermittelt wird.

4. Verfahren nach Anspruch 3, **dadurch gekennzeichnet, dass** in Abhängigkeit der ermittelten Steigung des ersten Weges (S₁) ein weiterer Blickwinkelbereich bestimmt wird.

5. Verfahren nach Anspruch 4, **dadurch gekennzeichnet, dass** das Außenspiegelersatzsystem (100) je Fahrzeugseite des Fahrzeuges (F) eine erste Kamera (10) und eine zweite Kamera (10) aufweist, wobei die erste Kamera (10) in Abhängigkeit des mittels der Steigung des ersten Weges (S₁) ermittelten Blickwinkelbereiches eingestellt wird und die zweite Kamera (10) in Abhängigkeit des mittels der Steigung des zweiten Weges (S₂) ermittelten Blickwinkelbereiches eingestellt wird.

6. Verfahren nach einem der Ansprüche 1 bis 5, **dadurch gekennzeichnet, dass** die Steigung des ersten Weges (S₁) und/oder die Steigung des zweiten Weges (S₂) mit Daten der aktuellen Position des Fahrzeuges (F) und mit Daten einer Umgebungskarte ermittelt werden.

7. Verfahren nach Anspruch 6, **dadurch gekennzeichnet, dass** die Daten der aktuellen Position des Fahrzeuges (F) mittels einer Fahrzeugsensoreinheit (12) ermittelt werden.

8. Verfahren nach Anspruch 6 oder 7, **dadurch gekennzeichnet, dass** die Daten der aktuellen Position des Fahrzeuges (F) und/oder die Daten der Umgebungskarte mittels einer Navigationseinheit (11) ermittelt werden.

9. Verfahren nach einem der Ansprüche 1 bis 8, **dadurch gekennzeichnet, dass** zur Ermittlung der Steigung des ersten Weges (S₁) und/oder der Steigung des zweiten Weges (S₂) mehrere Steigungswerte entlang eines definierten Streckenabschnittes des ersten Weges (S₁) und/oder des zweiten Weges (S₂) gemittelt werden.

10. Verfahren nach einem der Ansprüche 1 bis 9, **dadurch gekennzeichnet, dass** bei der Bestimmung des mittels der Steigung des ersten Weges (S₁) ermittelten Blickwinkelbereiches und/oder des mittels der Steigung des zweiten Weges (S₂) ermittelten Blickwinkelbereiches ein Kurvenverlauf des ersten Weges (S₁) und/oder ein Kurvenverlauf des zweiten Weges (S₂) mit erfasst werden.

11. Verfahren nach einem der Ansprüche 1 bis 10, **dadurch gekennzeichnet, dass** bei der Bestimmung des mittels der Steigung des ersten Weges (S₁) ermittelten Blickwinkelbereiches und/oder des mittels der Steigung des zweiten Weges (S₂) ermittelten Blickwinkelbereiches eine Kopfbewegung eines Fahrers des Fahrzeuges (F) mit erfasst wird.

12. System (200) zum Steuern eines Außenspiegelersatzsystems (100) eines Fahrzeuges (F) im Bereich zwei sich kreuzender Wege (S₁, S₂), wobei sich das Fahrzeug (F) auf dem ersten Weg (S₁) bewegt, mit mindestens einer Datenerfassungseinheit (17), in welcher eine Steigung des zweiten Weges (S₂) ermittelt wird, mit mindestens einer Auswerteeinheit (13), in welcher in Abhängigkeit der ermittelten Steigung des zweiten Weges (S₂) ein Blickwinkelbereich bestimmt wird, und mit mindestens einer Steuereinheit (14), mittels welcher mindestens eine Kamera (10) des Außenspiegelersatzsystems (100) in Abhängigkeit des in Abhängigkeit der ermittelten Steigung des zweiten Weges (S₂) bestimmten Blickwinkelbereichs eingestellt wird.

13. System (200) nach Anspruch 12, **dadurch gekennzeichnet, dass** die Datenerfassungseinheit (17) eine Navigationseinheit (11) und/oder eine Fahrzeugsensoreinheit (12) aufweist.

14. Außenspiegelersatzsystem (100) für ein Fahrzeug (F), mit mindestens einer Kamera (10), mit mindestens einer in einem Innenraum des Fahrzeuges (F) angeordneten Anzeigeeinrichtung (15), welche mit der Kamera (10) verbunden ist und ein von der Kamera (10) aufgenommenes Bild anzeigt, und mit einem nach Anspruch 12 oder 13 ausgebildeten System (200), mittels welchem die mindestens eine Kamera (10) einstellbar ist.

## Claims

1. Method for controlling an exterior mirror substitute system (100) of a vehicle (F) in the region of two crossing paths (S₁, S₂), in which the vehicle (F) is moving along the first path (Si), wherein a gradient of the second path (S₂) is established and a viewing angle range is determined as a function of the established gradient of the second path (S₂), wherein at least one camera (10) of the exterior mirror substitute system (100) is set depending on the viewing angle range determined as a function of the established gradient of the second path (S₂).

2. Method according to Claim 1, **characterized in that** an angle of inclination of the vehicle (F) is determined.

3. Method according to Claim 1 or 2, **characterized in that** a gradient of the first path (S₁) is established.

4. Method according to Claim 3, **characterized in that** a further viewing angle range is determined as a function of the established gradient of the first path (S₁).

5. Method according to Claim 4, **characterized in that** the exterior mirror substitute system (100) has a first camera (10) and a second camera (10) on each vehicle side of the vehicle (F), wherein the first camera (10) is set depending on the viewing angle range established by means of the gradient of the first path (S₁) and the second camera (10) is set depending on the viewing angle range established by means of the gradient of the second path (S₂).

6. Method according to any one of Claims 1 to 5, **characterized in that** the gradient of the first path (S₁) and/or the gradient of the second path (S₂) are established using data relating to the current position of the vehicle (F) and using data relating to a map of the surroundings.

7. Method according to Claim 6, **characterized in that** the data relating to the current position of the vehicle (F) are established by means of a vehicle sensor unit (12).

8. Method according to Claim 6 or 7, **characterized in that** the data relating to the current position of the vehicle (F) and/or the data from the map of the surroundings are established by means of a navigation unit (11).

9. Method according to any one of Claims 1 to 8, **characterized in that** a plurality of gradient values are established along a defined route section of the first path (S₁) and/or of the second path (S₂) for the purposes of establishing the gradient of the first path (S₁) and/or the gradient of the second path (S₂).

10. Method according to any one of Claims 1 to 9, **characterized in that** a curve of the first path (S₁) and/or a curve of the second path (S₂) are also captured when determining the viewing angle range established by means of the gradient of the first path (S₁) and/or the viewing angle range established by means of the gradient of the second path (S₂).

11. Method according to any one of Claims 1 to 10, **characterized in that** a head movement of a driver of the vehicle (F) is also captured when determining the viewing angle range established by means of the gradient of the first path (S₁) and/or the viewing angle range established by means of the gradient of the second path (S₂).

12. System (200) for controlling an exterior mirror substitute system (100) of a vehicle (F) in the region of two crossing paths (S₁, S₂), wherein the vehicle (F) is moving along the first path (S₁), comprising at least one data capture unit (17), in which a gradient of the second path (S₂) is established, comprising at least one evaluation unit (13), in which a viewing angle range is determined as a function of the established gradient of the second path (S₂), and comprising at least one control unit (14), by means of which at least one camera (10) of the exterior mirror substitute system (100) is set depending on the viewing angle range determined as a function of the established gradient of the second path (S₂).

13. System (200) according to Claim 12, **characterized in that** the data capture unit (17) has a navigation unit (11) and/or a vehicle sensor unit (12).

14. Exterior mirror substitute system (100) for a vehicle (F), comprising at least one camera (10), comprising at least one display device (15) arranged in an interior of the vehicle (F), said display device being connected to the camera (10) and displaying an image recorded by the camera (10), and comprising a system (200) embodied according to Claim 12 or 13, by means of which the at least one camera (10) is adjustable.

## Revendications

1. Procédé pour commander un système de substitution de rétroviseur extérieur (100) d'un véhicule (F) dans la zone de deux parcours (S₁, S₂) qui se croisent, avec lequel le véhicule (F) se déplace sur le premier parcours (S₁), une pente du deuxième parcours (S₂) étant déterminée et une plage d'angles de vision étant définie en fonction de la pente déterminée du deuxième parcours (S₂), au moins une caméra (10) du système de substitution de rétroviseur extérieur (100) étant réglée en fonction de la plage d'angles de vision définie en fonction de la pente déterminée du deuxième parcours (S₂).

2. Procédé selon la revendication 1, **caractérisé en ce qu'**un angle d'inclinaison du véhicule (F) des défini.

3. Procédé selon la revendication 1 ou 2, **caractérisé en ce qu'**une pente du premier parcours (S₁) est déterminée.

4. Procédé selon la revendication 3, **caractérisé en ce qu'**une plage d'angles de vision supplémentaire est définie en fonction de la pente déterminée du premier parcours (S₁).

5. Procédé selon la revendication 4, **caractérisé en ce que** le système de substitution de rétroviseur extérieur (100) possède de chaque côté de véhicule du véhicule (F) une première caméra (10) et une deuxième caméra (10), la première caméra (10) étant réglée en fonction de la plage d'angles de vision déterminée au moyen de la pente du premier parcours (S₁) et la deuxième caméra (10) étant réglée en fonction de la plage d'angles de vision déterminée au moyen de la pente du deuxième parcours (S₂).

6. Procédé selon l'une des revendications 1 à 4, **caractérisé en ce que** la pente du premier parcours (S₁) et/ou la pente du deuxième parcours (S₂) sont déterminées avec des données de la position actuelle du véhicule (F) et avec des données d'une carte de l'environnement.

7. Procédé selon la revendication 6, **caractérisé en ce que** les données de la position actuelle du véhicule (F) sont déterminées au moyen d'une unité capteur de véhicule (12).

8. Procédé selon la revendication 6 ou 7, **caractérisé en ce que** les données de la position actuelle du véhicule (F) et/ou les données de la carte de l'environnement sont déterminées au moyen d'une unité de navigation (11).

9. Procédé selon l'une des revendications 1 à 8, **caractérisé en ce que** la moyenne de plusieurs valeurs de pente le long d'une portion de trajet définie du premier parcours (S₁) et/ou du deuxième parcours (S₂) est calculée en vue de déterminer la pente du premier parcours (S₁) et/ou la pente du deuxième parcours (S₂).

10. Procédé selon l'une des revendications 1 à 9, **caractérisé en ce qu'**un tracé de courbure du premier parcours (S₁) et/ou un tracé de courbure du deuxième parcours (S₂) sont détectés en même temps lors de la définition de la plage d'angles de vision déterminée au moyen de la pente du premier parcours (S₁) et/ou de la plage d'angles de vision déterminée au moyen de la pente du deuxième parcours (S₂).

11. Procédé selon l'une des revendications 1 à 10, **caractérisé en ce qu'**un mouvement de la tête d'un conducteur du véhicule (F) est détecté en même temps lors de la définition de la plage d'angles de vision déterminée au moyen de la pente du premier parcours (S₁) et/ou de la plage d'angles de vision déterminée au moyen de la pente du deuxième parcours (S₂).

12. Système (200) pour commander un système de substitution de rétroviseur extérieur (100) d'un véhicule (F) dans la zone de deux parcours (S₁, S₂) qui se croisent, le véhicule (F) se déplaçant sur le premier parcours (S₁), comprenant une unité d'acquisition de données (17) dans laquelle est déterminée une pente du deuxième parcours (S₂), comprenant une unité d'interprétation (13) dans laquelle est définie une plage d'angles de vision en fonction de la pente déterminée du deuxième parcours (S₂), et comprenant au moins une unité de commande (14) au moyen de laquelle au moins une caméra (10) du système de substitution de rétroviseur extérieur (100) est réglée en fonction de la plage d'angles de vision définie en fonction de la pente déterminée du deuxième parcours (S₂).

13. Système (200) selon la revendication 12, **caractérisé en ce que** l'unité d'acquisition de données (17) possède une unité de navigation (11) et/ou une unité capteur de véhicule (12).

14. Système de substitution de rétroviseur extérieur (100) pour un véhicule (F), comprenant au moins une caméra (10), comprenant au moins un dispositif d'affichage (15) disposé dans un espace intérieur du véhicule (F), lequel est relié à la caméra (10) et affiche une image enregistrée par la caméra (10), et comprenant un système (200) configuré selon la revendication 12 ou 13, au moyen duquel l'au moins une caméra (10) peut être réglée.
